# EUROPÄISCHE PATENTSCHRIFT

(11) **EP 3 019 274 B1**
(45) Veröffentlichungstag und Bekanntmachung des Hinweises auf die Patenterteilung: **13.03.2019**
(21) Anmeldenummer: 14772055.1
(22) Anmeldetag: 09.07.2014
(51) Int. Cl.: B01J 31/18, B01J 31/22, C01B 3/38, C02F 1/00

(54) **ABWASSERAUFBEREITUNG UND WASSERSTOFFPRODUKTION**
WASTEWATER TREATMENT AND HYDROGEN PRODUCTION
TRAITEMENT DES EAUX USÉES ET PRODUCTION D'HYDROGÈNE

(30) Priorität: 09.07.2013 DE 102013011379
(43) Veröffentlichungstag der Anmeldung: 18.05.2016
(73) Patentinhaber: Prechtl, Martin, 50354 Hürth (DE); Prechtl, Matthias, 63073 Offenbach am Main (DE)
(72) Erfinder: PRECHTL, Martin, 50354 Hürth (DE); SCHLÖRER, Nils, 50823 Köln (DE); HEIM, Leo, 51103 Köln (DE)
(74) Vertreter: Sparing, Rolf Klaus
(86) Internationale Anmeldenummer: PCT/DE2014/000344
(87) Internationale Veröffentlichungsnummer: WO 2015/003680

(56) Entgegenhaltungen:
- WO-A1-03/016211
- DE-A1-102011 007 661
- LI J ET AL: "Investigations on the effect of Cu<2+>/Cu<1+> redox couples and oxygen vacancies on photocatalytic activity of treated LaNi1-xCuxO3 (x=0.1, 0.4, 0.5)", INTERNATIONAL JOURNAL OF HYDROGEN ENERGY, ELSEVIER SCIENCE PUBLISHERS B.V., BARKING, GB, Bd. 35, Nr. 23, 1. Dezember 2010 (2010-12-01), Seiten 12733-12740, XP027459195, ISSN: 0360-3199, DOI: 10.1016/J.IJHYDENE.2010.08.140 [gefunden am 2010-11-02]
- J. ARAÑA ET AL: "Photocatalytic degradation of formaldehyde containing wastewater from veterinarian laboratories", CHEMOSPHERE, Bd. 55, Nr. 6, 1. Mai 2004 (2004-05-01), Seiten 893-904, XP55158071, ISSN: 0045-6535, DOI: 10.1016/j.chemosphere.2003.11.060
- LEO E. HEIM ET AL: "Selective and mild hydrogen production using water and formaldehyde", NATURE COMMUNICATIONS, Bd. 5, 8. April 2014 (2014-04-08), XP55157995, DOI: 10.1038/ncomms4621
- XINZHENG YANG: "Mechanistic Insights into Ruthenium-Catalyzed Production of H 2 and CO 2 from Methanol and Water: A DFT Study", ACS CATALYSIS, Bd. 4, Nr. 4, 4. April 2014 (2014-04-04), Seiten 1129-1133, XP55157993, ISSN: 2155-5435, DOI: 10.1021/cs500061u

## Beschreibung

Die Erfindung betrifft ein Verfahren zur Aufbereitung mit Formaldehyd kontaminierter Abwässer zur Erzeugung molekularen Wasserstoffs aus einer zumindest teilweise wässrigen Lösung in Gegenwart eines Katalysators in homogener Katalyse, bei dem das Abwasser mit einem Katalysator in Kontakt gebracht wird und entstehender Wasserstoff kontinuierlich generier- und speicherbar ist.

Bei der Produktion von industriellen Gütern und bei dem Verbrauch gesundheitsgefährdender Verbindungen entstehender Abwässer können und dürfen wegen ihrer bekannten gesundheitsgefährdenden Eigenschaften nicht ohne Aufbereitung in die Umwelt gelangen. Aus diesem Grunde wird seitens der Anwender und Verbraucher gesundheitsgefährdender Stoffes eine Aufarbeitung der Verbindungen angestrebt, die neben der Vermeidung gesundheitlicher Aspekte auch eine stoffliche Verwertung als Alternative zur Entsorgung wirtschaftlich sinnvoll erscheinen lassen.

In vielen Anwendungen wird Formaldehyd als eine desinfizierende und oxidative Verbindung eingesetzt. Diese Verbindung ist eine außerordentlich vielfältig eingesetzte Chemikalie, die in einer Fülle von Produkten des alltäglichen Gebrauchs enthalten ist. Als mögliche Formaldehydquellen kommen vor allem verleimte Produkte aus Holzwerkstoffen, Korkplatten und ähnlichen Materialien (formaldehydhaltige Kleber), Dämmstoffe und Aufschäummaterial (Formaldehyd-Harnstoff-Schäume), Anstrichstoffe, Farben, Lacke, Parkettsiegel (Formaldehyd im Konservierungs- oder Bindemittel), Glas- und Steinwolle, Fasermatten (formaldehydhaltige Bindemittel), Textilien und textile Bodenbeläge (Veredelung mit Harnstoff-Formaldehyd-Harzen) in Betracht.

Der Verwendung von Formaldehyd stehen jedoch einige gesundheitsgefährdende Aspekte entgegen. So sollte durch die Gefahr der Giftigkeit eine Hautberührung, ein Einatmen und ein Verschlucken möglichst vermieden werden.

Nach dem Stand der Technik gibt es mehrere Verfahren zur Aufbereitung belasteter Abwässer. Es gibt mehrere Verbindungen, die in Abwasser, hauptsächlich aus industriellen Verfahren, eine Verschmutzungsgefahr darstellen, beispielsweise Hypochlorit, Wasserstoffperoxid und Formaldehyd. Viele Industrieabwasserströme enthalten Verbindungen die korrodierend wirken und toxisch sind. Es ist erwünscht, solche Verbindungen wie Hypochlorid-Ionen, Wasserstoffperoxid oder Formaldehyd zu zersetzen, bevor das Abwasser aus industriellen Verfahren in die öffentliche Kanalisation abgelassen wird.

Beispielsweise ist in der US 3,965,249 die Verwendung von Oxiden von Cobalt, Kupfer und Nickel offenbart und in der US 4,297,333 ist die Verwendung eines Feststoffs offenbart, der Nickeloxid und einen Spinell mit zwei Metallkomponenten, NiCo₂O₄; enthält.

In der US 4,073,873 wird die Verwendung eines Cobaltoxid-Trägerkatalysators vorgeschlagen, bei dem das Cobalt in Form eines Spinells mit einer einzigen Metallkomponente, Cobaltoxidspinell, vorhanden ist.

In der US 4,297,333 wird die Verwendung eines Trägerkatalysators vorgeschlagen, bei dem das aktive Material eine Mischung aus Nickeloxid und Nickel/Cobalt-Spinell NiCo₂O₄ ist. In der US 4,400,304 ist offenbart, dass es für die industrielle Anwendung solcher Katalysatoren bestimmte Hemmnisse gibt. So kann katalytisches Material aus einem Oxid von Nickel, Cobalt, Eisen oder Iridium die Oxidation von im Abwasser enthaltenen Schmutzstoffen katalysieren, wobei eine Oxidation jedoch nicht gewünscht ist, da wiederum toxische Verbindungen entstehen können.

Verfahren zur Herstellung von Wasserstoff aus Carbonsäuren sind im allgemeinen bekannt. Die EP 1 446 354 B1 offenbart eine heterogen katalysierte Herstellung von Wasserstoff durch Umsetzung einer oxygenierten Kohlenwasserstoffverbindung in basischer Lösung, wobei als oxygenierte Kohlenwasserstoffverbindungen Aldehyde, Alkohole und Carbonsäuren verwendet werden können, die mit Hilfe von Kohle geträgerten Metallen oder Metallverbindungen eine Umsetzung der oxygenierten Kohlenwasserstoffen zu Wasserstoff bei Raumtemperatur gewährleisten.

Aus der WO 2012/013 940 A2 ist ein Verfahren zur Herstellung von Wasserstoff aus Alkoholen, Aldehyden und Säuren bekannt. Die Katalyse erfolgt heterogen in wässriger Lösung bei Raumtemperatur in Anwesenheit metallischer Nanopartikel.

Weiterhin ist aus der WO 03/016211 A1 ein Verfahren bekannt, bei dem Kohlenstoff geträgerte Platinkatalysatoren zur Reduktion von wässrigen formaldehydhaltigen Lösungen in KOH eingesetzt werden, wobei Wasserstoff entsteht.

Ferner wurde in Investigations on the effect of Cu²+/Cu¹+ redox couples and oxygen vacancies on photocatalytic activity of treated LaNi₁-ₓCuₓO₃ (x=0.1, 0.4, 0.5) by Juanjuan Li et. al. in Journal of hydrogen energy 35 (2010), 2733-2740 ein Verfahren zur Produktion von Wasserstoff mit Kupfer-dotierten Pervoskit-Verbindungen beschrieben, wobei durch photokatalytische Zersetzung von wässrigen Formaldehydlösungen eine Wasserstoffproduktion erfolgt.

In dem Artikel Photocatalytic degradiation of formaldehyde containing wastewater from veterinarian laboratories by J. Arana et. al. in Chemosphere 55 (2004), 893-904 wird Mechanismus der Aufreinigung von mit Formaldehyd, verunreinigten Abwasser unter Verwendung von TiO₂ bei unterschiedlichen pH-Werten beschrieben.

Ferner wird in dem Artikel Mechanistic insight into Ruthenium-Catalyzed production of H₂ and CO₂ from Methanol and Water: A DFT study der Mechanismus der Dehydogenisierung von Methanol zu Formaldehyd und Ameisensäure mit Hilfe eines dreizähnig an N und/oder P gebundenen Rutheniumkatalysators offenbart, wobei Wasserstoff entsteht.

Schließlich wird in der DE 10 2011 007 661 A1 ein Verfahren zur Wasserstofferzeugung durch selektive Dehydrierung von Ameisensäure unter Verwendung eines katalytischen Systems bestehend aus einem Übergangsmetallkomplex aus Übergangsmetallsalz und mindestens einem tripodalen, tetradentaten Liganden beschrieben, wobei das Übergangsmetall ausgewählt ist aus der Gruppe umfassend Ir, Pd, Pt, Ru, Rh, Co und Fe. Der Übergangsmetallkomplex kann entweder als ein homogener Katalysator oder ein heterogenisierter Metallkomplex, der auf einen Träger aufgebracht wurde, Verwendung finden

Eine Anwendung der im Stand der Technik beschriebenen Katalysatoren zur homogenen Katalyse in der Abwasseraufbereitung und Wasserstofferzeugung ist nicht bekannt.

Ausgehend vom bekannten Stand der Technik liegt der Erfindung die Aufgabe zu Grunde molekularen Wasserstoff aus einer zumindest teilweise wässrigen Formaldehyd-Lösung in Gegenwart eines Katalysators in homogener Katalyse unter milden Reaktionsbedingungen zu erzeugen.

Die Aufgabe wird erfindungsgemäß durch die Merkmale der unabhängigen Ansprüche 1 und 9 gelöst.

Die Erfindung betrifft die Behandlung von Abwasser und die Erzeugung von Wasserstoff, wobei formaldehydhaltiges Abwasser aus einem industriellen Verfahren verwendet werden kann. Zu dem mit Formaldehyd belasteten Abwasser kann Formaldehyd beispielsweise in Form von Paraformaldehyd zugesetzt werden, um die Produktion von Wasserstoff in größeren Ausbeuten zu fördern. Im Folgenden sind Ausführungsformen genannt, die das Verständnis der Erfindung erleichtern sollen, wobei zur Aufarbeitung von mit Formaldehyd belasteten Abwasser und zur Wasserstoffproduktion eine formaldehydhaltige Lösung mit einem Katalysator in Kontakt gebracht, der ausgewählt ist aus einer Gruppen von Verbindungen die 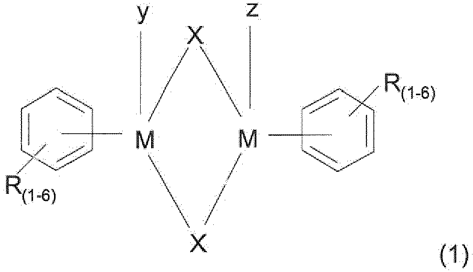 umfassen,
wobei
M = Ru, Fe, Os
X = H, F, Cl, Br, I, CN, OCN, NCO, CNO, SCN, NCS, SeCN
R = H, alkyl, cycloalkyl, aryl, vinyl, allyl, perfluoroalkyl, perfluoroaryl, Cl, Br, I, CN, OCN, NCO, CNO, SCN, NCS, SeCN, NO₂, NH₂, NR₂, OH, OR', SH, SR, SO₃, SiR'₃, (SiOₓ)ₙ, IL (ionic liquid Kationen), Polystyrol, Imidazol, Pyridin, Pyrrolidin
R' = alkyl, cycloalkyl, aryl, vinyl, allyl, perfluoroalkyl, perfluoroaryl
Y/Z = H, F, Cl, Br, I, CN, OCN, NCO, CNO, SCN, NCS, SeCN und OR zur Ausbildung einet direkte Bindung der Sauerstoffatome zu einem Kohlenstoffatom
bedeutet.

Der Katalysator kann in verschiedenen generischen Varianten vorliegen, sodass einerseits eine dimere Form des Katalysators (Formel 1 bis 14) als auch eine monomere Form vgl. Formeln (15 bis 30) verwendbar ist. Insbesondere können folgende dimere Verbindungen (Formel 2 bis 7) zur Aufbereitung formaldehydhaltigen Abwassers und zur Wasserstoffproduktion verwendet werden, wobei Formel (4) den erfindungsgemäßen Katalysators als Dihalogen-(p-cymene)-ruthenium-(II)-Dimere darstellt. 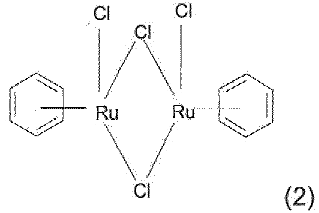 [Ru(η-C₆H₆)]₂Cl₄ 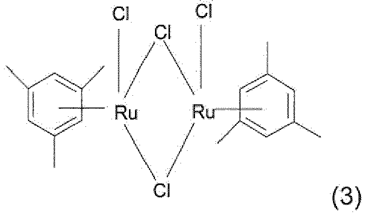 [Ru(η-C₆H₃Me₃)]₂Cl₄ 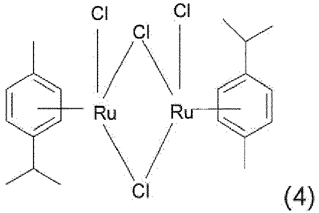 [Ru(η-p-cymene)]₂Cl₄ 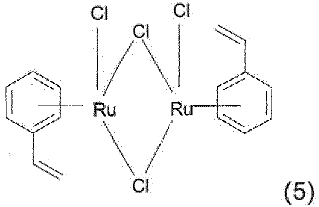 [Ru(η-C₆H₅-C₂H₃)]₂Cl₄ 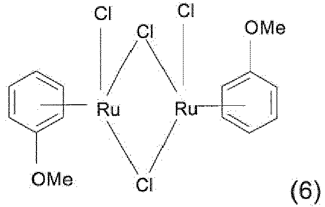 [Ru(η-C₆H₅-OMe)]₂Cl₄ 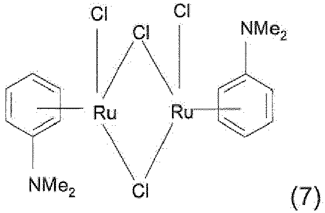 [Ru(η-C₆H₅-N(Me)₂)]₂Cl₄

Die voranstehend genannten Katalysatoren der Formeln (1 bis 7) bestehen aus Verbindungen, die in einer ionischen Flüssigkeit (IL) gelöst und auf einem porösen Trägermaterial dispergiert werden können. Im Falle der Katalysatoren mit einer IL entstehen feste, fließfähige Katalysatoren, die auch in klassischen Festbettreaktoren für kontinuierliche Gasphasenreaktionen eingesetzt werden können. Die Präparationsmethodik nutzt ein Hilfslösungsmittel, mit dem das Trägermaterial mit der IL und dem Katalysator imprägniert wird. Anschließend wird das Lösungsmittel im Vakuum vorsichtig abgezogen, so dass ein trockener Katalysator zurückbleibt. Träger wie Pulver, Agglomerate und Extrudate wurden erfolgreich eingesetzt und anschließend durch ICP und SEM-EDX-Messungen auf die Verteilung von Katalysator und IL vermessen. Durch Parameteranpassung in der Synthese können auch Core-shell- oder Egg-yolk-Verteilungen erzielt werden. Dieses ermöglicht die Präparation von Katalysatoren mit hoher Reproduzierbarkeit bei gleichzeitig geringen Kosten und ist gleichzeitig skalierbar von Gramm-Chargen bis hin zu Tonnenmaßstäben, was die Einführung in industrielle Prozesse erleichtert.

Bevorzugte Katalysatoren als Bestandteile einer ionischen Flüssigkeit können insbesondere folgende Struktur aufweisen 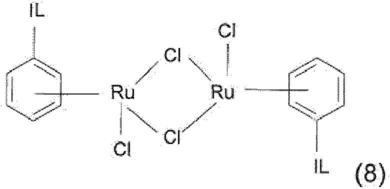 [Ru(η-C₆H₅-IL)]₂Cl₄

Eine der effizientesten Methoden, um molekulare organische und metallorganische Katalysatoren für die homogene katalytische Prozesse in Mehrphasensystemen zu recyceln ist die Immobilisierung an einer festen (heterogenen) oder flüssige Trägermaterial (stationäre Phase). Es sind verschiedene Techniken für die Immobilisierung etabliert. Der Katalysator kann über eine Alkyl-Kette kovalent auf dem gewünschten Träger verankert werden. Dies ist möglich, beispielsweise unter Verwendung eines Katalysators mit einem Styrol-Liganden für eine Copolymerisation mit Styrol wodurch ein Polystyrol-verankerten Katalysators entsteht. 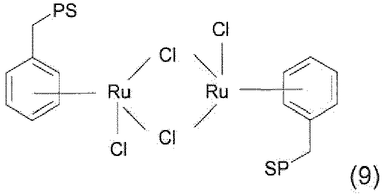 [Ru(η-C₆H₅-Polystyrol)]₂Cl₄

Diese Polystyrolverbindungen als Polystyrol-Kügelchen können für die Katalyse in Wasser verwendet werden. Obwohl das Katalysatormaterial ein Feststoff ist, bleibt das katalytische Verfahren eine homogene katalytische Reaktion auf molekularer Ebene, da die Katalysator-Seitenketten, obwohl der Träger nicht gelöst ist, solvatisiert vorliegen. Eine weitere Möglichkeit ist die Immobilisierung zum Beispiel an Kieselsäure. Um Eine kovalente Bindung des Katalysators auf Siliciumdioxid zu erhalten, muss ein Katalysator-Ligand eine Funktionalität (Alkyl Silikate), die geeignet ist zur Kondensation im Sol-Gel-Verfahren, enthalten. Auf diese Weise kann der molekulare Katalysator auf unlöslichem Siliciumdioxid verankert werden, jedoch bleibt der Katalysator über den Abstandshalter gelöst. Ein anderer möglicher Ansatz, besonders ionische Katalysatoren zu immobilisieren, ist die Pfropfung bzw. Auftragung auf polaren Trägermaterialien wie Siliciumdioxid, Aluminiumoxid ohne oder in ionischen Flüssigkeiten. Hier haften die Katalysatoren auf der Oberfläche über starke physikalische Interaktionen, aber es sind nicht kovalent verankert. Auch hier bleiben die katalytischen Prozesse mechanistisch ein molekularer homogener Prozess. Ein modernes Beispiel für kombinierte Technologien ist das SILP-Konzept (supportet ionic liquid phase) oder SILC-Phase (supportet ionic liquid phasecatalysis), wobei eine dünne Schicht von ionischer Flüssigkeit aufgepfropft / an Kieselgel verankert ist und die ionische flüssige Phase einen molekularen Katalysator enthält. Das SILP-Material ist unlöslich, aber die dünne Schicht von ionischer Flüssigkeit gelöst. Für den katalytischen Prozesse bleibt ein homogener molekularen Prozess entscheidend und nicht die heterogene Katalyse. 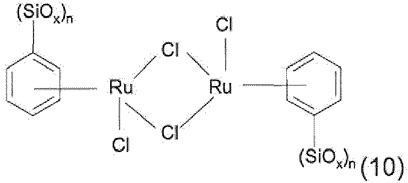 [Ru(η-C₆H₅-(SiOₓ)ₙ)]₂Cl₄

Zu geeigneten Trägermaterialien gehören auch chlorierte und fluorierte Harze, Metalle wie z.B. Palladium und Platin, filmbildende Metalle wie z.B. Zirkonium und andere Materialien wie z.B. Graphit, Mineralfasern, Aluminiumoxid, Zirkoniumdioxid, Spinelle (z.B. Magnesiumspinell) und keramische Werkstoffe auf Aluminiumoxidbasis und Mischungen davon. Das Trägermaterial ist vorzugsweise oxidisch. Die Stücke des Trägermaterials können eine regelmäßige Gestalt haben, wie sie beispielsweise gebildet wird, indem eine oxidische Masse, z.B. gamma-Aluminiumoxid, pelletiert oder formgepreßt wird und die pelletierte oder formgepreßte Masse gebrannt wird, um ein regelmäßiges, nichtporöses Material zu erhalten. Bei einer Alternative können die Stücke des Trägermaterials durch Zertrümmern bzw. Zerkleinern hergestellt werden, um unregelmäßige Gestalten und Größen des nichtporösen oxidischen Materials zu erhalten. Die Stücke, ob regelmäßig oder unregelmäßig, haben geeigneterweise eine maximale mittlere Abmessung von weniger als 25 mm, vorzugsweise weniger als 10 mm, z. B. etwa 1 bis 3 mm. Bei einer Ausgestaltung können die Stücke die Größe von Sandteilchen (fein-, mittel- oder grobkörnig) und beispielsweise eine mittlere Abmessung von 0,1 bis 0,5 mm haben. Wir haben gefunden, dass Katalysatoren, die gebildet werden, indem eine Mischung aus Oxiden bereitgestellt wird, die auf Stücken aus dem nichtporösen Material getragen wird, im Vergleich zu Katalysatoren, bei denen die innige Mischung durch Imprägnieren bzw. Tränken in einen porösen Träger eingebracht wird, eine verbesserte Aktivität liefern.

Ferner wurden zur Abwasseraufbereitung und Wasserstoffproduktion Verbindungen gefunden, die die Struktur 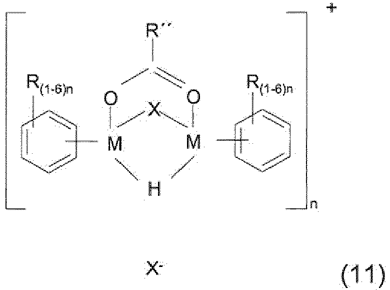 aufweisen,
wobei
M = Ru, Fe, Os
X = H, F, Cl, Br, I, CN, OCN, NCO, CNO, SCN, NCS, SeCN
R = H, alkyl, cycloalkyl, aryl, vinyl, allyl, perfluoroalkyl, perfluoroaryl, Cl, Br, I, CN, OCN, NCO, CNO, SCN, NCS, SeCN, NO₂, NH₂, NR₂, OH, OR', SH, SR, SO₃, SiR'₃, (SiOₓ)ₙ, IL (ionic liquid Kationen), Polystyrol, Imidazol, Pyridin, Pyrrolidin
R' = alkyl, cycloalkyl, aryl, vinyl, allyl, perfluoroalkyl, perfluoroaryl
Y/Z = H, F, Cl, Br, I, CN, OCN, NCO, CNO, SCN, NCS, SeCN und OR zur Ausbildung einet direkte Bindung der Sauerstoffatome zu einem Kohlenstoffatom
bedeutet.

Katalysatoren können insbesondere folgende Struktur aufweisen 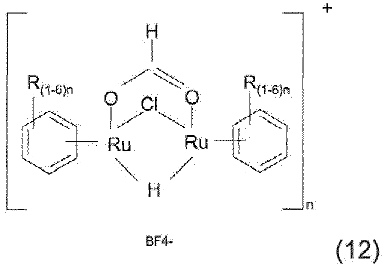 [(Ru(Aren))₂(µ-H)(µ-Cl)(µ-HCOO)][BF₄] 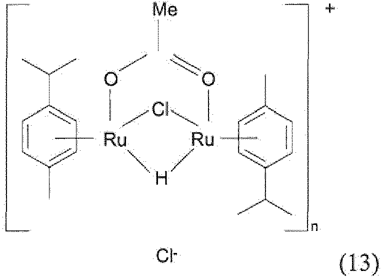 [(Ru(p-cymen))₂(µ-H)(µ-Cl)(µ-MeCOO)][Cl] 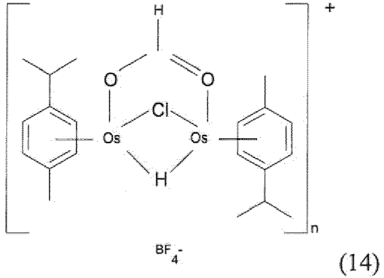 [Os(η-p-cymene)]₂(µ-H)(µ-Cl)(µ-HCOO)][BF4]

Ferner können als Ausführungsformen Katalysatoren zur Abwasseraufbereitung und Wasserstoffproduktion für das Verständnis der Erfindung verwendet werden, die die Struktur 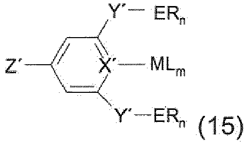 aufweisen, wobei
E = N, P, S, O, As
L = CO, H, Halogen
R = Alkyl, Aryl
X'= O, C, P, N
Y'= CH₂, O, NH, CR₂
Z'= Halogen, Alkyl, Aryl
M = Fe, Ru, Os
E = NHC (N-heterocyclic carbene, PR₂
bedeutet.

Insbesondere können für die Abwasseraufbereitung und Wasserstoffproduktion Verbindungen als Ausführungsform von Katalysatoren für das Verständnis der Erfindung verwendet werden, die die Formeln (16 bis 30) beinhalten (nicht Bestandteil der Erfindung) 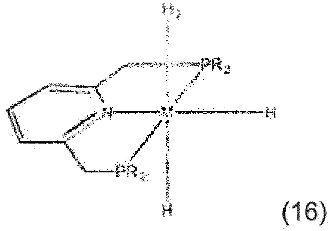 [M(H₂)(H)₂((R₂PCH₂)₂C₅H₃N)] 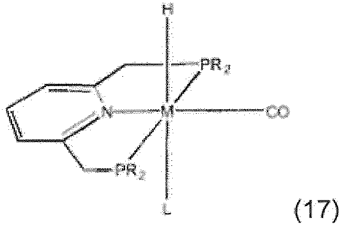 [M(CO)(H)(L)((R₂PCH₂)₂C₅H₃N)] 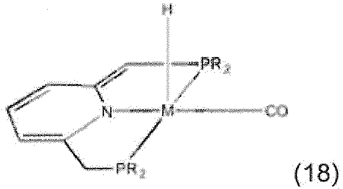 [M(CO)(H)((R₂PCH)(R₂PCH₂)C₅H₃N)] 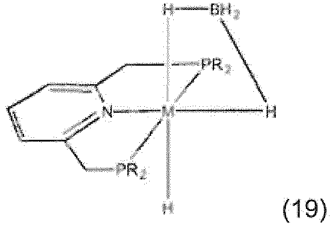 [M(BH₄)(H)((R₂PCH₂)₂C₅H₃N)] 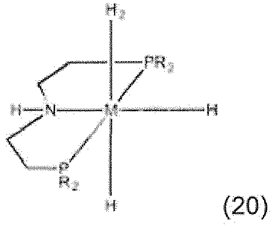 [M(H₂)(H)₂(HN(R₂PC₂H₄)₂)] 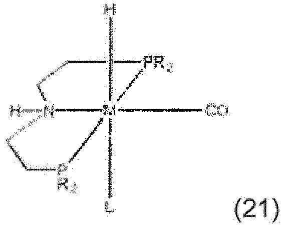 [M(CO)(H)(L)(HN(R₂PC₂H₄)₂)] 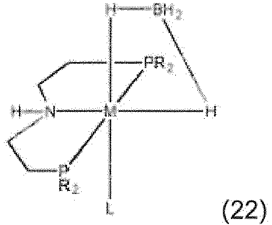 [M(BH₄)(L)(HN(R₂PC₂H₄)₂)] 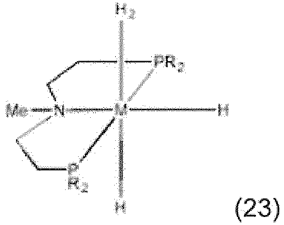 [M(H₂)(H)₂(MeN(R₂PC₂H₄)₂)] 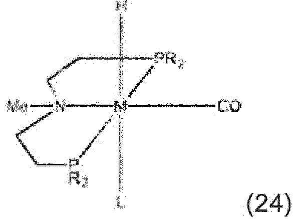 [M(CO)(H)(L)(MeN(R₂PC₂H₄)₂)] 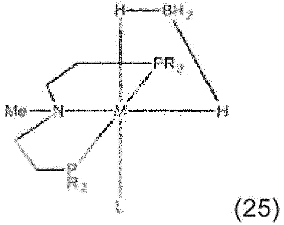 [M(BH₄)(L)(MeN(R₂PC₂H₄)₂)] 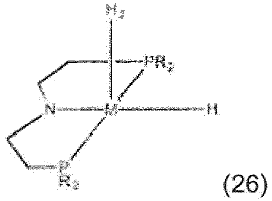 [M(H₂)(H)(N(R₂PC₂H₄)₂)] 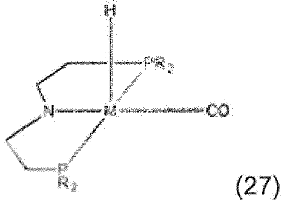 [M(CO)(H)(N(R₂PC₂H₄)₂)] 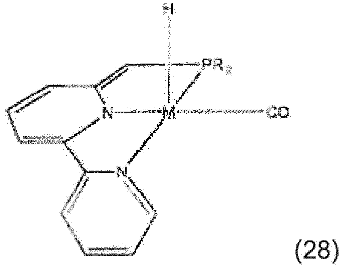 [M(CO)(H)((R₂PCH)(C₅H₄N)C₅H₃N)] 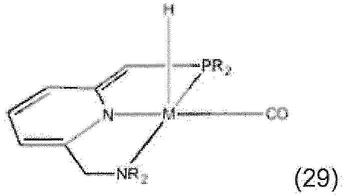 [M(CO)(H)((R₂PCH)(R₂NCH₂)C₅H₃N)] 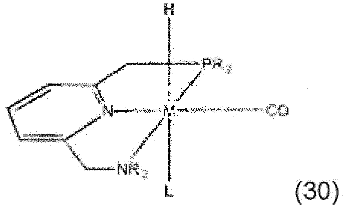 [M(CO)(H)(L)((R₂PCH₂)(R₂NCH₂)C₅H₃N)]

Es können im erfindungsgemäßen Verfahren Katalysatoren zur Abwasseraufbereitung und Wasserstoffproduktion verwendet werden, die die Struktur 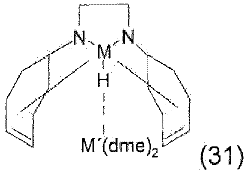 aufweisen,
wobei,
M = Fe, Ru, Os
M'= Li, Na, K, Cs
R = alkyl, cycloalkane, aryl, vinyl, perfluoroalkyl, perfluoroaryl, Heterozyklen, Halogene, NO₂, NR'₂, OH, OR', SH, SR', SO₃, SiR₃', SiOR'₃, (SiOₓ)ₙ, Polystyrol (PS), ion liquid (IL)-Kationen, Imidazol, Pyridin, Pyrrolidin
R'= alkyl, cycloalkane, aryl, vinyl, perfluoroalkyl, perfluoroaryl, Heterozyklen d(me)₂ = Dimethoxyethan und ähnliche Lösungsmittel
bedeutet.

Das in Formel (31) nicht eingezeichnete Ligandenrückgrat weist die Struktur (32) auf : 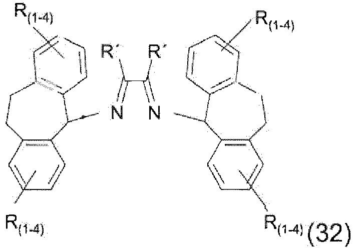 wobei,
R = alkyl, cycloalkane, aryl, vinyl, perfluoroalkyl, perfluoroaryl, Heterozyklen, Halogene, NO₂, NR'₂, OH, OR', SH, SR', SO₃, SiR₃', SiOR'₃, (SiOₓ)ₙ, Polystyrol (PS), ion liquid (IL)-Kationen, Imidazol, Pyridin, Pyrrolidin
bedeutet.

Zur Durchführung des erfindungsgemäßen Verfahrens wird ein Katalysatorbett mit einem oxidativ zu behandelnden Abwasser in Kontakt gebracht, das einen der erfindungsgemäßen Katalysatoren enthält. Zu den Verbindungen die im Rahmen des erfindungsgemäßen Verfahrens oxidiert werden sollen gehört beispielsweise Formaldehyd in Form einer wässrigen Lösung. Das Abwasser, das Verbindungen wie beispielsweise Formaldehyd enthält, fließt durch das Bett hindurch, wobei verwendetes Abwasser vor dem Kontakt mit dem Katalysatorbett zunächst gefiltert worden ist. Mit dem Verfahren zur Zersetzung von Formaldehyd kann auch Gebrauch gemacht werden, um weitere Verbindungen im Abwasser wie beispielsweise Formiate durch Oxidation zu zerstören. Auf diese Weise können auch andere organische Schmutzstoffe erfolgreich und wirksam auf im Abwasser verringert werden. Solche organischen Verbindungen können oxidativ im Wesentlichen zu Wasserstoff, Kohlendioxid und Wasser zersetzt werden. Folglich ist keine weitere Abwasserbehandlung erforderlich, da die Oxidationsprodukte unschädlich für die Umwelt sind. Als Beispiele für Abwasser, das behandelt werden können, gehören Abwasser aus der Papier und Möbelherstellung, Abwasser aus Krankenhäusern und dergleichen. Beispiele für organische Verbindungen die in solch einem Abwasser vorhanden sein können und die durch das erfindungsgemäße Verfahren im Wesentlichen entfernt werden können, gehören Ammoniak, Ameisensäure, Amine, beispielsweise Methylamin und Zucker, insbesondere Glucose.

In vorteilhafter Weise wird eine wässrige Lösung des Formaldehyds aus Paraformaldehyd, hergestellt und mit dem zu behandelnden Abwasser vermischt. Die Mischung aus Abwasser und Oxidationsmittel wird dann über das Katalysatorbett geleitet. Die Menge des Oxidationsmittels, die für eine wirksame Behandlung des Abwassers damit vermischt wird, hängt von verschiedenen Parametern ab wie der Temperatur, bei der die Behandlung durchgeführt wird, und der Aktivität des verwendeten Katalysators.

Vorteilhaft an dem erfindungsgemäßen Verfahren ist insbesondere auch, dass die verwendeten Katalysatoren zwar in homogener Katalyse eine Umsetzung der Verbindungen im Abwasser katalysieren aber durch ihre Auftragung oder Bindung an geeignete Trägerstoffe leicht zurückgehalten werden können. Dazu können in dem verwendeten Katalysatorbett Filter oder Siebe angeordnet werden, die zwar das Abwasser durch das Katalysatorbett hindurchtreten lassen aber ein Wegspülen der Katalysatoren verhindern.

Zur Zersetzung des Formaldehyds, entweder allein oder in Gegenwart organischer Schmutzstoffe, wird in geeigneter Weise das erfindungsgemäße Verfahren durchgeführt, bei dem der pH-Wert des Abwassers zwischen 4 und 8 liegt. Die Temperatur, bei der das Verfahren durchgeführt wird, liegt vorzugsweise über Umgebungstemperatur, beispielsweise im Bereich von 50 bis 100 °C. Bei Kontakt der wässrigen Formaldehydlösung wird Wasserstoff und CO₂ gebildet. Der entstandene Wasserstoff kann zur Speicherung aufgefangen werden und für eine spätere Verwendung beispielsweise im Bereich der Brennstoffzellentechnik oder im Kraftfahrzeugbetrieb verwendet werden.

Die Erfindung umfasst daher die Verwendung von Formaldehyd/Methandiol-Lösungen und/oder, Paraformaldehyd in zumindest teilweise wässriger Lösung zur Energiespeicherung bzw. Wasserstoffproduktion. Eine Anwendung kann in mobilen und wie stationären Anwendungen erfolgen. Als Quelle des hydridischen Wasserstoffs können hierbei das Formaldehyd- oder Paraformaldehyd/Methandiol-Lösungen dienen, wobei die Quelle für protischen Wasserstoff das Wasser selbst ist. Es handelt sich bei dem erfindungsgemäßen Verfahren um eine spezielle Form des sogenannten "Water Splittings" bei dem Wasser ebenfalls als Energiespeicher dienen kann. Der Wasserstoff wird in Gegenwart von einem Katalysator bei milden Reaktionsbedingungen, d.h. bei geringen Temperaturen von weniger als 100°C schnell, d.h. in wenigen Minuten freigesetzt.

Als Katalysator können eine Vielzahl von Materialien wie Metallkomplexe, Metallnanopartikel, Metalloxide, geträgerte Metalle auf Kohle, Silica, Aluminiumoxid, saure und basische Katalysatoren dienen. Bevorzugte Verbindungen enthalten Rutheniumkomplexe, wie beispielsweise Dihalogen(p-cymene)ruthenium(II) Dimere. Als Halogene kommen alle Elemente der siebten Hauptgruppe in Betracht. Der am meisten bevorzugte Katalysator ist das Dichloro(p-cymene)ruthenium(II) der in Lösung in einem Massenanteil in einem Bereich von 0.1 bis 1.5 mol-%, bevorzugt 0.5 mol-% und besonders bevorzugt 1 mol-% vorliegt. Der Stoffumsatz beträgt mehr als 50%, bevorzugt 70-80% bezogen auf den Einsatz der Edukte, was ein deutliche Verbesserung hinsichtlich des Stoffumsatzes gegenüber geträgerten Metall-Katalysatoren oder Metallnanopartikel, die in heterogener Katalyse bei einer Katalysatorbeladung von 1 mol% einen Umsatz von weniger als 1% bezogen auf den Einsatz der Edukte aufweisen, darstellt.

Der Wasserstoff wird bei der Reaktion in hoher Reinheit produziert, wobei in der Gasphase lediglich Kohlendioxid als Nebenprodukt auftritt. Katalysatorgifte wie Kohlenmonoxid und Sauerstoff entstehen hierbei nicht. Somit ist diese spezielle Art von "Water Splitting" anderen Methoden überlegen, denn es entsteht neben Wasserstoff kein Sauerstoff, welcher den Katalysator deaktivieren könnte, sondern lediglich Kohlendioxid, welches keinen Einfluss auf die Katalysatoraktivität hat. Das Katalysatorsystem ist zudem lange Zeit an Luft stabil und rezyklierbar, wodurch es anderen homogenkatalytischen Systemen überlegen ist, welche nur unter Schutzgas ihre Aktivität behalten.

Der katalytisch generierte Wasserstoff lässt sich anschließend in Wasserstoffbrennstoffzellen verwenden, ebenso ist dieses katalytische System interessant für Transferhydrierungsreaktionen in der synthetischen Chemie. In der Mehrphasenkatalyse lassen sich somit auf einfachen Wege Dreifachbindungen wie sie bei Alkinen und Nitrilen zu Doppelbindungen wie Alkenen und Iminen und Einfachbindungen Alkanen, und Aminen hydrieren und Doppelbindungen Alkene, Imine, Aldehyde, Ketone zu Einfachbindungen wie Alkane, Amine, primäre und sekundäre Alkohole hydrieren. Die hocheffiziente Verwendung von diesen gut zugänglichen und damit günstigen Ausgangsstoffen Formaldehyd/Methandiol, Paraformaldehyd in zumindest teilweise wässriger Lösung als Ausgangs- und Nebenprodukt der Abwasseraufbereitung kann der anfallende Wasserstoff als Wasserstoffspeicher/Energiespeicher beispielsweise auch für Transferhydrierungsreaktionen in der Synthesechemie angewendet werden.

In Isotopen-Experimenten mit deuterierten Formaldehyd/Paraformaldehyd bzw. Deuteriumoxid, sowie Mischungen mit undeuterierten Edukten, konnte ein Isotopeneffekt beobachtet werden, wodurch die Anreicherung von schwereren Isotopen prinzipiell möglich ist. Das heißt es kommt zu einer kinetischen Trennung, und es wird z. B. zuerst H₂, dann HD und zu Letzt D₂ freigesetzt. Dies ist mit anderen Systemen die Methanol, Ameisensäure oder Ammoniakboran-Addukte nutzen nicht möglich und wurde bislang auch nicht beobachtet. Erfindungsgemäß ist es hingegen möglich, dass man Formaldehyd/Paraformaldehyd und Wasser sowie deren Isotopologen modular in verschieden Mischungsverhältnissen einsetzen und sukzessive H₂, HD und D₂ produziert. Demzufolge lässt sich aus Wasser Deuteriumoxid anreichern, da zuerst H₂O zersetzt wird und zu Letzt erst D₂O.

Salze im Rahmen der Erfindung sind vorzugsweise gesundheitlich unbedenkliche Salze. Sie umfassen Salze üblicher Basen, wie beispielsweise Alkalimetallsalze (z.B. Natrium- und Kaliumsalze), Erdalkalimetallsalze (z.B. Calcium- und Magnesiumsalze) und Ammoniumsalze.

Als Solvate werden im Rahmen der Erfindung solche Formen der Verbindungen bezeichnet, welche in festem oder flüssigem Zustand durch Koordination mit Lösungsmittelmolekülen einen Komplex bilden. Hydrate sind eine spezielle Form der Solvate, bei denen die Koordination mit Wasser erfolgt.

### Beispiele:

Die Prozentangaben in den folgenden Beispielen sind, sofern nicht anders angegeben, Gewichtsprozente; Teile sind Gewichtsteile. Lösungsmittel Verhältnisse, Verdünnungsverhältnisse und Konzentrationsangaben von flüssig/flüssig-Lösungen beziehen sich jeweils auf das Volumen.

### Beispiel 1 der Herstellung von Wasserstoff für Verbindungen der Formel 2 (nicht Bestandteil der Erfindung) und 13

In einem Katalysatorbett wurden 0,5 mol% des Katalysators Dichloro(p-cymene)ruthenium(II) Dimer in variablen Mengen einer wässrigen 37% Formaldehydlösung gelöst. Der Gasauslass wurde an einem Coriolis-Massendurchflussmesser in Reihe geschaltet und an einem Massenspektrometer angeschlossen für die qualitative und quantitative Analyse der gasförmigen Produkte. Die wässrige Lösung wurde auf eine Reaktionstemperatur von 40-95°C erwärmt und die Gasphase wurde kontinuierlich analysiert. Es ergab sich für Ru(η-C₆H₆)]₂Cl₄ ein 25%iger Umsatz nach 90 Minuten Reaktionszeit unter Standardbedingungen. Für [(Ru(p-cymen))2(m-H)(m-Cl)(m-MeCOO)][Cl] ergab sich bei analoger Anwendung der voranstehenden Bedingung für Herstellung von Wasserstoff nach Formel 13 ein 29%iger Umsatz nach 90 Minuten Reaktionszeit unter Standardbedingungen.

### Beispiel 2 zur Herstellung der Katalysatoren für die Abwasseraufbereitung und Wasserstofferzeugung nach Formel (nicht Bestandteil der Erfindung)

Hydratisiertes Ruthenium(III)chlorid (2,0 g in 100 mL Ethanol) wurde unter Schutzgas mit 10 mL Cyclohexadien (1,3- oder 1,4-) für 4 h zum Rückfluss erhitzt. Der braune Niederschlag wurde abfiltriert, mit Methanol gewaschen und unter vermindertem Druck getrocknet. Es wurden 1,3 g Di-□-chloro-bis[(□-Benzol)chlororuthenium(II) (95 % Ausbeute) erhalten.

### Beispiel 3 zur Herstellung der Katalysatoren für die Abwasseraufbereitung und Wasserstofferzeugung nach Formel 7 (nicht Bestandteil der Erfindung)

Zu einer Lösung von [Ru(1,5-Cyctooctadien)(□6-*N*,*N*-Dimethylaminobenzol)] in 10 mL Aceton wurde unter Schutzgas bei -78 °C eine Lösung aus wässriger HCl in Aceton (1 M aq., 1:20 mit Aceton verdünnt) zugetropft bis keine weitere Farbänderung zu beobachten war. Der rote Niederschlag wurde abfiltriert, mit Aceton und Pentan gewaschen und unter vermindertem Druck vom Lösungsmittel befreit.

### Beispiel 4 zu Herstellung von Katalysatoren für die Abwasseraufbereitung und Wasserstofferzeugung nach Formel 8 (nicht Bestandteil der Erfindung)

Hydratisiertes Ruthenium(III)chlorid (300 mg) und 1 g 1,2-Dimethyl-3-(2-(1,4-cyclohexadien)ethyl)imidazolium-Tetrafluoroborat in 20 mL Methanol wurden unter Schutzgas für 10 h auf 80 °C erhitzt. Der orange Niederschlag wurde abfiltriert, mit Methanol gewaschen und unter vermindertem Druck getrocknet. Es wurden 496 mg (95 % Ausbeute) des Produkts erhalten.

### Beispiel 5 zur Herstellung von Katalysatoren für Abwasseraufbereitung und Wasserstofferzeugung nach Formel 9 (nicht Bestandteil der Erfindung)

Es wurden 200 mg [Ru(1,5-Cyclooctadien)(□⁶-Naphthalin)], 5,2 g 1-Methyl-1-*p-*tolylethen und 60 mL Acetonitril für 42 h bei Raumtemperatur unter Schutzgas in einem geschlossenen Gefäß gerührt. Das Lösungsmittel und Nebenprodukte wurden unter vermindertem entfernt. Der entstandene Feststoff wurde in Tetrahydrofuran gelöst und mittels Säulenchromatographie über neutrales Aluminiumoxid gereinigt. 150 mg der so erhaltenen Verbindung wurden in 50 mL Aceton gelöst, tropfenweise mit 250 mL konz. HCl (aq.) versetzt und für 30 min unter Schutzgas, bei Raumtemperatur gerührt. Der Niederschlag wurde abfiltriert, mit Aceton gewaschen und unter vermindertem Druck getrocknet. Es wurden 106 mg (79 % Ausbeute) des Monomers erhalten. Unter Schutzgas wurden zu 6,1 mg des Monomers wurden 2,3 mL Styrol gegeben. Nachdem 16,4 mg Azobisisobutyronitril zugegeben wurden und für 4 h auf 70 °C erhitzt. Das Rohprodukt wurde in Toluol aufgenommen und durch die Zugabe von Methanol ausgefällt. Die Trocknung des Polymers erfolgte unter vermindertem Druck.

### Beispiel 6 zur Herstellung von Katalysatoren für Abwasseraufbereitung und Wasserstofferzeugung nach Formel 10 (nicht Bestandteil der Erfindung)

Zu einer Lösung aus 80 mL Ethanol, 20 mL Wasser und 1 mL wässriger Ammoniaklösung (28 %) wurden langsam 0,4 mL Tetraethoxysilan gegeben. Nachdem für 1 h gerührt wurde, wurden 30 mg [RuCl₂(3-Phenyl-1-(triethoxysilyl)propan)]₂ zugegeben und für weitere 5 h gerührt. Die Partikel wurden durch zentrifugieren abgetrennt und unter vermindertem Druck getrocknet.

### Beispiel 7 zur Herstellung von Katalysatoren für Abwasseraufbereitung und Wasserstofferzeugung nach Formel 12 (nicht Bestandteil der Erfindung)

Es wurden 400 mg [RuCl₂(*p*-Cymene)]₂ mit 57 mL Ameisensäure in 20 mL Wasser für 15 min auf 95 °C erhitzt. Es wurde schnell abgekühlt und die Reaktionslösung mit 71,4 mg NaBF₄ versetzt. Der orange Niederschlag wurde abfiltriert, mit wenig Wasser gewaschen und unter vermindertem Druck getrocknet.

### Beispiel 8 zur Herstellung von Katalysatoren für Abwasseraufbereitung und Wasserstofferzeugung nach Formel 14 (nicht Bestandteil der Erfindung)

Es wurden 120 mg [OsCl₂(*p*-Cymene)]₂ mit 40 mL Ameisensäure in 10 mL Wasser für 15 min auf 95 °C erhitzt. Es wurde schnell abgekühlt und die Reaktionslösung mit 30,4 mg NaBF₄ versetzt. Der orange Niederschlag wurde abfiltriert, mit wenig Wasser gewaschen und unter vermindertem Druck getrocknet.

### Beispiel 9 zur Herstellung von Katalysatoren für Abwasseraufbereitung und Wasserstofferzeugung nach Formel 16 (nicht Bestandteil der Erfindung)

Unter Schutzgas wurden in einem Glasautoklaven 100 mg [Ru(H₂)H₂(MePNP)] (MePNP: Bis((Di-t*ert*-butylphosphin)ethyl)methylamin) in 6 mL Toluol gelöst und mit 3.5 Äquivalenten Ethanol versetzt. Nachdem für 48 h bei 80 °C gerührt wurde, wurde das Lösungsmittel unter vermindertem Druck entfernt und der resultierende Feststoff mit Pentan gewaschen.

### Beispiel 10 zur Herstellung von Katalysatoren für Abwasseraufbereitung und Wasserstofferzeugung nach Formel 21 (nicht Bestandteil der Erfindung).

Unter Schutzgas wurden in einem Glasautoklaven 320 mg [Ru(1,5-Cyclooctadien)(Methylallyl)₂] und 400 mg Bis((Di-t*ert*-butylphosphin)ethyl)amin in 5 mL Pentanl gelöst. Der Autklav wurde mit 5 bar H₂ befüllt und, unter Rühren, für 48 h auf 80 °C erhitzt. wurde das Lösungsmittel unter vermindertem Druck entfernt und der resultierende Feststoff mit Pentan gewaschen. Nachdem der Druck abgelassen wurde, wurde die überstehende Lösung abgetrennt und der Feststoff mit Pentan gewaschen. Der Feststoff wurde in Toluol aufgenommen und für 1 h unter einem Argonstrom bei Raumtemperatur gerührt. Nachdem das Lösungsmittel unter vermindertem Druck entfernt wurde, wurde das Produkt als grünes Pulver erhalten.

### Beispiel 11 zur Herstellung von Katalysatoren für Abwasseraufbereitung und Wasserstofferzeugung nach Formel 31

Es wurden 1,0 g [RuCl₂(PPH₃)₄] und 380 mg *N*,*N*-Bis(5*H*-dibenzo[*a*,*d*]cyclohepten-5-yl)-1,2-diaminoethan (trop₂dae) unter Schutzgas in 20 mL Tetrahydrofuran gelöst und für 16 h bei 65 °C gerührt. Nachdem auf Raumtemperatur abgekühlt wurde, wurden 20 mL Diethylether zugegeben und filtriert. Der Filterkuchen wurde mit Ether gewaschen und unter vermindertem Druck vom Lösungsmittel befreit. Es wurden 640 mg *cis*-[RuCl₂(PPH₃)(trop₂dae)] als Zwischenprodukt erhalten.

Zu 600 mg *cis*-[RuCl₂(PPH₃)(trop₂dae)] 136 mg KO^{t}Bu gegeben und in 20 mL THF gelöst. Das System wurde durch nacheinander erfolgendes Einfrieren, Evakuieren und Auftauen inertisiert. Nachdem das Reaktionsgefäß mit 1,5 bar Wasserstoff befüllt wurde, wurde für 16 h bei Raumtemperatur gerührt. Anschliesend wurde die Reaktionslösung filtriert und das Filtrat unter vermindertem Druch auf ca. 1/4 des ursprünglichen Volumens eingeengt. Durch Überschichten der Lösung mit n-Hexan und trocknen der entstanden Kristalle wurden 398 mg [K(dme)₂][Ru(H)(trop₂dad)] erhalten.

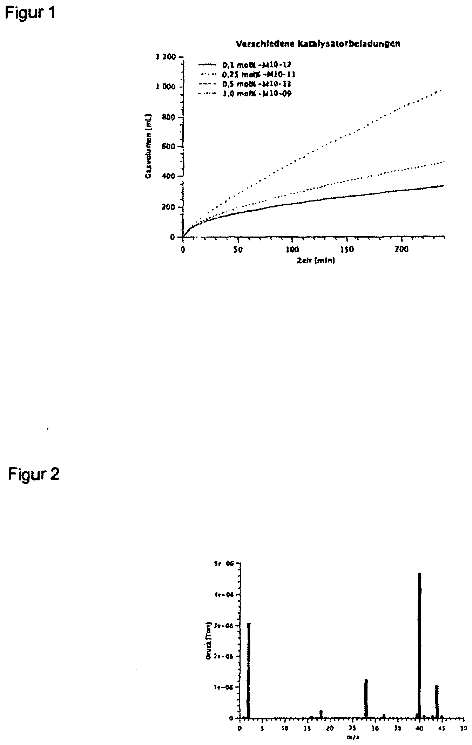

Die Erfindung wird anhand der nachfolgenden Figuren 1 bis 6 nochmals erläutert:
Figur 1 zeigt die Zeit/Umsatzkurve der Dehydrierung von wässrigem Formaldehyd an Luft bei unterschiedlichen Katalysatorkonzentrationen nach dem in Beispiel 1 beschriebenen Verfahren. Als gasförmige Produkte entstehen ausschließlich Wasserstoff und Kohlendioxid.

Die Figur 2 zeigt das Ergebnis der qualitativen massenspektrometischen Analyse der Dehydrierung von Formaldehyd in wässriger Lösung an Luft. Argon wurde als Spülgas verwendet. Es ist erkennbar, dass nur Wasserstoff und Kohlendioxid entsteht.

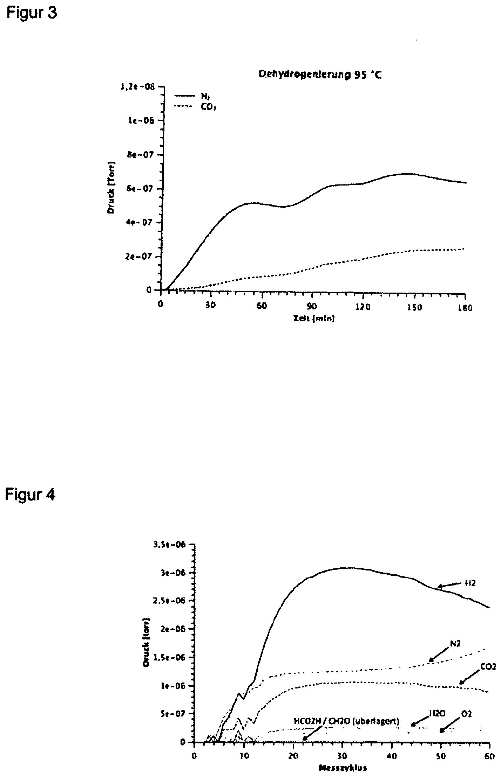

Figur 3 zeigt die Ergebnisse der qualitativen und semiquantitativen massenspektroskopischen Untersuchung der Dehydrierung von Formaldehyd in Wasser an Luft. Man erkennt ein fast linearen Anstieg von H₂ als Funktion des Drucks von Beginn der Umsetzung bis zu einem Zeitpunkt T=45 min. Der Anstieg von CO₂ als Funktion des Drucks erfolgt langsamer, da zunächst Wasserstoff und Ameisensäure gebildet wird, die nachfolgend decarboxyliert.

In Figur 4 ist die Dehydrierung von Formaldehyd in wässriger Lösung an Luft dargestellt mittels zeitaufgelöster Gasphasen-Massenspektrometrie. Auf der Abzisse sind die Scanzyklen des Massenspektrometers zu erkennen. Ameisensäure und Formaldehyd liegen wie erwartet kaum in der Gasphase vor, sondern befinden sich in der flüssigen Phase, daher sind die Kurven nahe der Null-Linie.

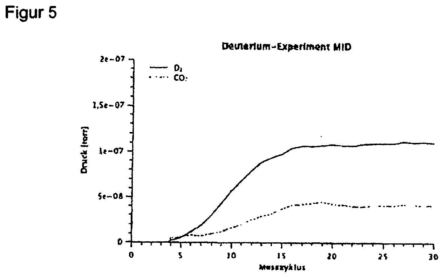

Figur 5 schließlich zeigt die Dehydrierung von Deuteriumformaldehyd gelöst in Deuteriumoxid an Luft. Es entsteht lediglich D₂ und CO₂. Es kann so qualitativ gezeigt werden zeigen, dass durch den Einsatz von D₂CO auch D₂ auf diesem Wege zugänglich ist.

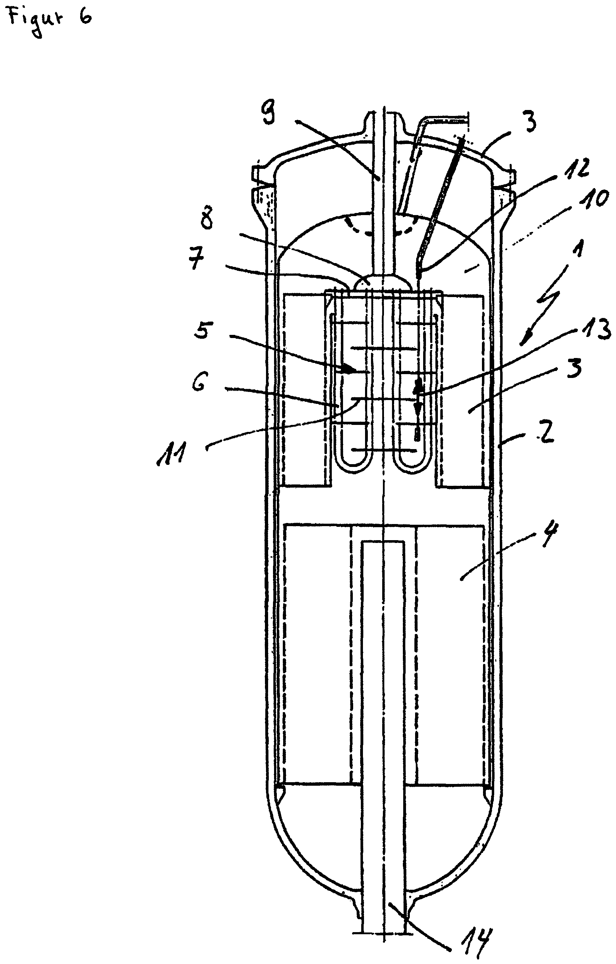

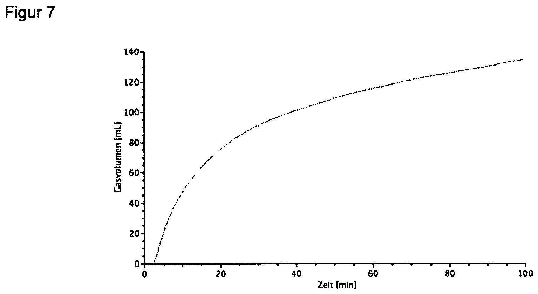

Figur 6 zeigt ein Gehäuse 2 mit Deckel 3, wobei im Inneren des Gehäuses zwei Katalysatorbetten 3 und 4 vorgesehen sind, auf deren speziellen Aufbau und deren spezielle konstruktive Gestaltung es hier nicht ankommt. Das zylindrische, erste Katalysatorbett 3 weist in seinem Inneren einen Wärmetauscher 5 auf, dessen Wärmetauscherrohre 6 U-förmig von innen nach außen gebogen und in einem gemeinsamen 35 Rohrboden 7 angeordnet sind. Die innenliegenden Teilrohre der U-bogenförmigen Wärmetauscherrohre 6 stehen mit einem Verteiler 8 in Verbindung zu dem der Zustrom 9 für das Abwasser führt. Die ableitenden Enden 40 der Rohrschenkel münden in eine Dom 10, von dem aus das erste Katalysatorbett 3 zur radialen Durchströmung beaufschlagt wird. Im Inneren des Wärmetauschers 5 sind Krümungen 11 angeordnet, um eine optimale Durchströmung zu gewährleisten. Auch ist eine Gasabführleitung 12 vorgesehen, deren Eintauchtiefe veränderbar ist, was mit dem Doppelpfeil 13 angedeutet sein soll. Nach radialer Durchströmung des zweiten Katalysatorbettes 4 gelangt das Abwasser zum Auslass 14.

## Patentansprüche

1. Verfahren zur Aufbereitung mit Formaldehyd kontaminierter Abwässer zur Erzeugung molekularen Wasserstoffs aus einer zumindest teilweise wässrigen Lösung in Gegenwart eines Katalysators in homogener Katalyse, wobei der entstehende Wasserstoff kontinuierlich generier- und speicherbar ist,
**dadurch gekennzeichnet,**
**dass** zur Erzeugung des molekularen Wasserstoffs der Katalysator in einer wässrigen Formaldehyd/Methandiollösung gelöst und der Katalysator Dichloro-(p-cymene)-ruthenium-(II)-Dimere umfasst, wobei die Lösung auf eine Temperatur in einem Bereich von 50°C bis 100°C erwärmt wird.

2. Verfahren nach Anspruch 1,
**dadurch gekennzeichnet, dass** der Massenanteil des Katalysators weniger als 1 mol-% in Lösung beträgt.

3. Verfahren nach Anspruch 1 oder 2,
**dadurch gekennzeichnet, dass** die Erzeugung molekularen Wasserstoffs bei einem pH-Wert in einem Bereich von 4 bis 8 erfolgt.

4. Verfahren nach einem der voranstehenden Ansprüche,
**dadurch gekennzeichnet, dass** der erzeugte molekulare Wasserstoff Isotope des Wasserstoffs enthält.

5. Verfahren nach einem der voranstehenden Ansprüche,
**dadurch gekennzeichnet, dass** eine Trennung von Isotopen des erzeugten molekularen Wasserstoffs erfolgt.

6. Verfahren nach einem der Ansprüche 1 bis 5 zum Einsatz in Brennstoffzellen.

7. Verfahren nach einem der Ansprüche 1 bis 5 zum Einsatz in Brennstoffzellen, zum Betrieb von Fahrzeugen.

8. Verfahren nach einem der Ansprüche 1 bis 5 zum Einsatz in Transferhydrierungsreaktionen, insbesondere zum Einsatz in der Mehrphasenkatalyse.

9. Verfahren zur Aufbereitung mit Formaldehyd kontaminierter Abwässer in homogener Katalyse, bei dem Abwasser in einem Katalysatorbett mit einem Katalysator in Kontakt gebracht wird und entstehender Wasserstoff kontinuierlich generier- und speicherbar ist,
**dadurch gekennzeichnet,**
**dass** der Katalysator aus einer Gruppe von Verbindungen ausgewählt ist, die Strukturen der Formel (31) 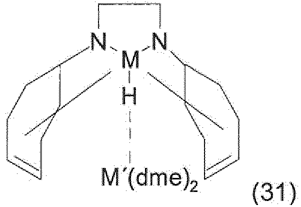 mit
M = Fe, Ru, Os
M'= Li, Na, K, Cs
dme = Dimethoxyethan und ähnliche Lösungsmittel bedeutet,
mit dem Ligandenrückrad (32) 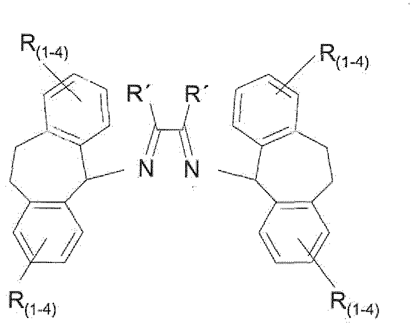
R = alkyl, cycloalkane, aryl, vinyl, perfluoroalkyl, perfluoroaryl, Heterozyklen, Halogene, NO₂, NR'₂, OH, OR', SH, SR', SO₃, SiR₃', SiOR'₃, (SiOₓ)ₙ, Polystyrol (PS), ion liquid (IL)-Kationen, Imidazol, Pyridin, Pyrrolidin
R'= alkyl, cycloalkane, aryl, vinyl, perfluoroalkyl, perfluoroaryl, Heterozyklen
umfassen.

10. Verfahren nach Anspruch 9, wobei der Massenanteil der Katalysatoren weniger als 1 mol-% in Lösung beträgt.

11. Verfahren nach Anspruch 9 oder 10, wobei die Abwasseraufbereitung bei einem pH-Wert in einem Bereich von 4 bis 8 erfolgt.

12. Verfahren nach einem der voranstehenden Ansprüche 9 bis 11, zum Einsatz in Transferhydrierungsreaktionen, insbesondere in der Mehrphasenkatalyse.

13. Verfahren nach einem der voranstehenden Ansprüche 9 bis 11, zum Betrieb von Brennstoffzellen, insbesondere zum Betrieb von Fahrzeugen.

## Claims

1. Method for treatment of waste water contaminated with formaldehyde in order to produce molecular hydrogen from an at least partially aqueous solution in the presence of a catalyst by homogeneous catalysis, wherein the resulting hydrogen can be continuously generated and stored, **characterised in that** for production of the molecular hydrogen the catalyst is dissolved in an aqueous formaldehyde/methanediol solution and the catalyst comprises dichloro-(p-cymene)-ruthenium-(II) dimers, wherein the solution is heated to a temperature in a range from 50 °C to 100 °C.

2. Method according to claim 1, **characterised in that** the proportion by mass of the catalyst is less than 1 mol% in solution.

3. Method according to claim 1 or 2, **characterised in that** the production of molecular hydrogen takes place at a pH value in a range from 4 to 8.

4. Method according to one of the preceding claims, **characterised in that** the molecular hydrogen which is produced contains isotopes of hydrogen.

5. Method according to one of the preceding claims, **characterised in that** a separation of isotopes of the molecular hydrogen which is produced takes place.

6. Method according to one of claims 1 to 5 for use in fuel cells.

7. Method according to one of claims 1 to 5 for use in fuel cells, for operation of vehicles.

8. Method according to one of claims 1 to 5 for use in transfer hydrogenation reactions, in particular for use in multi-phase catalysis.

9. Method for treatment of waste water contaminated with formaldehyde by homogeneous catalysis, wherein in a catalyst bed waste water is brought into contact with a catalyst and resulting hydrogen can be continuously generated and stored, **characterised in that** the catalyst is selected from a group of compounds which comprise structures of formula (31) 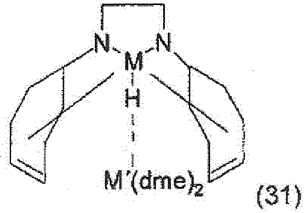 with
M = Fe, Ru, Os
M'= Li, Na, K, Cs
dme = dimethoxyethane and similar solvents,
with the ligand backbone (32) 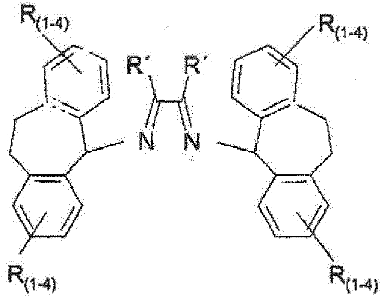
R = alkyl, cycloalkane, aryl, vinyl, perfluoroalkyl, perfluoroaryl, heterocycles, halogens, NO₂, NR'₂, OH, OR', SH, SR', SO₃, SIR₃', SiOR'₃, (SiOx)ₙ, polystyrene (PS), ion liquid (IL) cations, imidazole, pyridine, pyrrolidine
R'= alkyl, cycloalkane, aryl, vinyl, perfluoroalkyl, perfluoroaryl, heterocycles.

10. Method according to claim 9, wherein the proportion by mass of the c atalysts is less than 1 mol% in solution.

11. Method according to claim 9 or 10, wherein the waste water treatment takes place at a pH value in a range from 4 to 8.

12. Method according to one of the preceding claims 9 to 11 for use in transfer hydrogenation reactions, in particular for use in multi-phase catalysis.

13. Method according to one of the preceding claims 9 to 11 for operation of fuel cells, in particular for operation of vehicles.

## Revendications

1. Procédé pour traiter des eaux usées contaminées par du formaldéhyde afin de produire de l'hydrogène moléculaire à partir d'une solution au moins partiellement aqueuse en présence d'un catalyseur lors d'une catalyse homogène, l'hydrogène obtenu pouvant être généré et stocké en continu, **caractérisé en ce que**, pour produire de l'hydrogène moléculaire, le catalyseur est dissous dans une solution aqueuse de formaldéhyde/méthanediol et **en ce que** le catalyseur comprend des dimères dichloro-(p-cymène)-ruthénium(II), la solution étant chauffée à une température située dans une plage allant de 50 °C à 100 °C.

2. Procédé selon la revendication 1, **caractérisé en ce que** le pourcentage massique du catalyseur représente moins de 1 % en moles de la solution.

3. Procédé selon la revendication 1 ou 2, **caractérisé en ce que** la production d'hydrogène moléculaire s'effectue à une valeur de pH dans une plage allant de 4 à 8.

4. Procédé selon l'une quelconque des revendications précédentes, **caractérisé en ce que** l'hydrogène moléculaire produit contient les isotopes de l'hydrogène.

5. Procédé selon l'une quelconque des revendications précédentes, **caractérisé en ce qu'**il se produit une séparation des isotopes de l'hydrogène moléculaire produit.

6. Procédé selon l'une quelconque des revendications 1 à 5 destiné à être utilisé dans des piles à combustible.

7. Procédé selon l'une quelconque des revendications 1 à 5 destiné à être utilisé dans des piles à combustible pour faire fonctionner des véhicules.

8. Procédé selon l'une quelconque des revendications 1 à 5 destiné à être utilisé dans des réactions d'hydrogénation par transfert, en particulier destiné à être utilisé en catalyse multiphasique.

9. Procédé pour traiter des eaux usées contaminées par du formaldéhyde lors d'une catalyse homogène, dans lequel les eaux usées sont mises en contact avec un catalyseur dans un lit catalytique et l'hydrogène obtenu peut être généré et stocké en continu, **caractérisé en ce que** le catalyseur est choisi dans le groupe des composés comprenant les structures de formule (31) 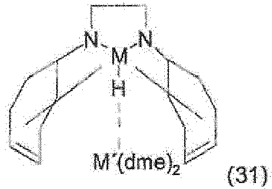 avec
M désignant Fe, Ru, Os
M' désignant Li, Na, K, Cs
dme désignant le diméthoxyéthane et des solvants analogues,
avec la charpente de ligand (32) 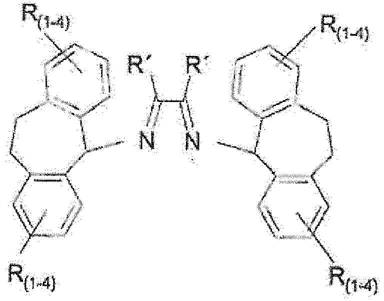
R désignant un alkyle, des cycloalcanes, un aryle, un vinyle, un perfluoroalkyle, un perfluoroaryle, des hétérocycles, des halogènes, NO₂, NR'₂, OH, OR', SH, SR', SO₃, SiR₃', SiOR'₃, (SiOx)ₙ, le polystyrène (PS), les cations de liquides ioniques (LI), l'imidazole, la pyridine, la pyrrolidine
R' désignant un alkyle, des cycloalcanes, un aryle, un vinyle, un perfluoroalkyle, un perfluoroaryle, des hétérocyles.

10. Procédé selon la revendication 9, le pourcentage massique des catalyseurs représentant moins de 1 % en moles de la solution.

11. Procédé selon la revendication 9 ou 10, le traitement des eaux usées s'effectuant à une valeur de pH située dans une plage allant de 4 à 8.

12. Procédé selon l'une quelconque des revendications 9 à 11 précédentes, destiné à être utilisé dans des réactions d'hydrogénation par transfert, en particulier en catalyse multiphasique.

13. Procédé selon l'une quelconque des revendications 9 à 11 précédentes, destiné au fonctionnement de piles à combustible, en particulier au fonctionnement de véhicules.
